Europäisches Patentamt

European Patent Office

Office européen des brevets

(19)

(11) Veröffentlichungsnummer: **0 046 544**
**B1**

# (12) EUROPÄISCHE PATENTSCHRIFT

(45) Veröffentlichungstag der Patentschrift:
**14.12.83**

(21) Anmeldenummer: **81106310.6**

(22) Anmeldetag: **13.08.81**

(51) Int. Cl.³: **H 02 G 1/14,** H 02 G 15/08,
B 23 K 37/04

(54) **Verfahren zum Verbinden von Kabeln.**

(30) Priorität: **26.08.80 NO 802524**

(43) Veröffentlichungstag der Anmeldung:
**03.03.82 Patentblatt 82/9**

(45) Bekanntmachung des Hinweises auf die Patenterteilung:
**14.12.83 Patentblatt 83/50**

(84) Benannte Vertragsstaaten:
**DE FR GB IT SE**

(56) Entgegenhaltungen:
**DE - B - 1 034 240**
**DE - B - 1 125 504**
**DE - C - 465 409**
**US - A - 3 711 920**

(73) Patentinhaber: **International Standard Electric
Corporation, 320 Park Avenue, New York New
York 10022 (US)**

(72) Erfinder: **Aanerud, Lars Arthur, Ragnhild Jolsens vei 38D,
N-2006 Lovenstad (NO)**
Erfinder: **Balog, Georg, Hyllveien 15b, N-3408 Tranby
(NO)**

(74) Vertreter: **Graf, Georg Hugo, Dipl.-Ing. et al, c/o
Standard Elektrik Lorenz AG Patent- und Lizenzwesen
Postfach 300 929 Kurze Strasse 8,
D-7000 Stuttgart 30 (DE)**

## Verfahren zum Verbinden von Kabeln

Die Erfindung bezieht sich auf ein Verfahren zum Verbinden von zwei Kabeln, wobei eine Kabelseele mit mindestens einem isolierten Leiter und eine Bewehrung aus mindestens einer Lage Bewehrungselemente aufweisen und die Kabelseelen in herkömmlicher Weise mineinander verbunden werden (DE-B Nr. 1125504).

Dabei können die Kabel auch auf der Kabelseele einen undurchlässigen Mantel und auf der Bewehrung einen Korrosionsschutz aufweisen.

Insbesondere bezieht sich das Verfahren auf das Verbinden der Bewehrungsdrähte von Kabeln, die während oder nach der Installation grossen Längsspannungen ausgesetzt sind.

Die Bewehrung von Kabeln dient zwei Erfordernissen: zur Abwehr von mechanischen Kräften in radialer Richtung und von Längsspannungen auf die Kabelseele. Zum Erhalt des notwendigen Schutzes werden Bewehrungen aus Bändern oder Drähten hergestellt. Gewöhnlich bestehen die Bänder oder Drähte aus Stahl, galvanisiertem Stahl oder Kupfer. Während eine Bewehrung aus Bändern gegen radiale Kräfte bestens schützt, wird eine Bewehrung aus Drähten gewöhnlich zum Abfangen der Längsspannungen benutzt.

Beim üblichen Verbinden der Bewehrungen von Kabeln, die geringen Längsspannungen ausgesetzt sind, werden die Bewehrungselemente durch normales Schweissen oder Löten miteinander verbunden, wobei die einzige Forderung ist, dass die Bewehrungsverbindung den gleichen radialen Kräften widersteht, wie die Bewehrung selbst.

Gemäss einem Verfahren werden die Bewehrungselemente mit einer grossen Überlappung miteinander verbunden. Dabei werden die Elemente des einen Endes auf der Kabelseele in Abständen so gebunden, dass mehrere geringe Erhebungen entstehen. Die Bewehrungselemente des anderen Endes werden dann über die erste Lage gebunden, wobei diese Lage eine wellige Oberfläche erhält und auf der ersten Lage festgelegt ist. Dieses Verfahren weist verschiedene Nachteile auf.

Es ist übliche Praxis, die Bewehrungsverbindung von der Kabelseelenverbindung abzusetzen, und bei mehreren Lagen von Bewehrungselementen werden die verschiedenen Verbindungen der Lagen über eine bestimmte Länge des Kabels verteilt.

Bei hohen Längsspannungen ausgesetzten Kabeln, beispielsweise bei Unterwasserkabeln, ist es wichtig, dass die Bewehrungsverbindung der Spannung aufgrund des Gewichtes des Kabels widerstehen kann. Dies gilt um so mehr, wenn ein verlegtes Unterwasserkabel aufgrund einer Beschädigung auf See repariert werden muss.

Um zu sichern, dass die Bewehrungsverbindung die Spannung aufnimmt, ist es wichtig, dass jedes Bewehrungselement gleiche Anteile der Spannung aufnimmt. Mit anderen Worten, die genannte Spannung ist auf alle Bewehrungselemente zu verteilen.

Bei Kabeln mit runden Drähten als Bewehrung werden die Drahtenden mit Gewinden versehen und jeder einzelne Draht mit Spannstangen gespannt, bis alle die gleiche Spannung aufweisen. Bei kleineren Spannungen ist dieses Verfahren befriedigend, es weist bei Kabeln mit grossen Spannungen Nachteile auf.

Um das Verfahren mit den Spannstangen benutzen zu können, müssen die Drähte nach dem Zurücklegen auf die Kabelseelenverbindung derart abgeschnitten werden, dass ein Spalt zwischen den Enden entsteht. Die Enden werden dann mit Gewinden versehen, die in das innere Gewinde der Spannstangen passen, worauf die einzelnen Stangen auf die Drahtenden geschraubt und angezogen werden. Das Anziehen gibt den Spannstangen den gleichen Winkel, wie die Drähte ihn aufweisen. Um eine ausreichende Spannung zu erzeugen, sollten die Spannstangen so lang wie möglich, und um den Kabeldurchmesser nicht unnötig zu vergrössern, sollen die Spannstangen so kurz wie möglich sein. Die Gefahr der Beschädigung der Drähte beim Eintritt in die Stangen besteht hierbei, weil die Drähte unter einem Winkel in die Spannstangen eingeschraubt werden.

Der Erfindung liegt die Aufgabe zugrunde, ein neues und verbessertes Verfahren zum Verbinden von zwei Kabeln, insbesondere zum Verbinden der Bewehrung von zwei Kabeln anzugeben, die grossen Längsspannungen ausgesetzt sind und wobei die Spannungen auf alle Bewehrungselemente verteilt sind und die Nachteile der bekannten Verfahren vermieden werden.

Diese Aufgabe wird bei einem Verfahren der eingangs genannten Art durch die kennzeichnenden Merkmale des Anspruchs 1 gelöst.

Wenn die beiden Kabel mit ihren Enden verbunden werden sollen, ist es wichtig, dass die Enden sich überlappen und die Bewehrung zur Verbindung vorbereitet ist. Die Vorbeitung der Verbindung beginnt damit, dass die Stelle bestimmt wird, an der die Kabelseele und die verschiedenen Lagen der Bewehrung jeweils verbunden werden. Hat das Kabel zwei Lagen Bewehrung und weist jede Lage nur eine Verbindung auf, dann ist es günstig, je eine Verbindung der Bewehrungslagen rechts und links von der Kabelseelenverbindung, in der Längsachse des Kabels gesehen, anzuordnen.

Nachdem die äussere Lage der Bewehrung zur Verbindung markiert worden ist, werden die Bewehrungselemente auf beiden Kabelenden zueinander in eine festgelegte Position auf dem Kabelumfang und im rechten Winkel in bezug auf die Kabellängsachse gebracht. Diese Festlegung kann durch eine umfassende Klammer auf den Elementen auf jedem Kabelende und in einem bestimmten Abstand voneinander geschehen.

Bei mehrlagigen Bewehrungen wird nach dem Festlegen der äusseren Lage diese aufgewunden oder abgehoben, um die darunterliegenden Lagen zu erreichen. In manchen Fällen sind die Bewehrungsdrähte so gross und ihr Material so steif, dass die Drähte abgeschnitten und später wieder eingesetzt werden müssen. In diesem Falle gibt es zwei Verbindungen pro Bewehrungslage, aber nur eine muss wie beschrieben behandelt werden.

Anstatt einer kreisförmigen Klammer ist es besser, eine Anzahl von Klammerteilen zu benutzen. Dann können die Bewehrungselemente auch noch nachdem Festlegen aufgewunden werden. Die Klammerteile werden durch Aufbringen auf Gruppen von Bewehrungselementen ausgerichtet und in dieser Ausrichtung gehalten.

Die Kabelseelen werden wie üblich miteinander verbunden und dann sind die Bewehrungslagen für eine Verbindung bereit. Werden die einzelnen Bewehrungsdrähte miteinander verschweisst, so kann dies auf dem Kabelumfang geschehen. Bei einer Verlötung der Drähte kann dies in einer Reihe entlang einer Mantellinie auf dem Kabel geschehen.

Durch Anlegen einer Klemmeinrichtung an die Klammern und Zusammenpressen der Klemmeinrichtung in Richtung der Längsachse des Kabels werden die Bewehrungselemente aufeinander zugezogen, bis sie sich überlappen. Bei der Anwendung einer derartigen Klemmeinrichtung werden die Klammerteile automatisch ausgerichtet, so dass die wieder in ihrer festgelegten Position sind. Ist diese Position und die vorbestimmte Spannung erreicht, dann werden die Bewehrungselemente abgeschnitten, so dass sie aneinanderstossen, und durch Schweissen, Löten oder auf andere Art miteinander verbunden.

Nach dem Verbinden von einzelnen Bewehrungselementen oder von jeweils zwei oder von Gruppen von Elementen unter der gewünschten Spannung wird die Klemmeinrichtung entfernt und die gegenseitige Festlegung durch Entfernen der Klammerteile aufgehoben. Schliesslich kann die Verbindung in üblicher Weise mit einem Korrosionsschutz versehen werden.

Um eine Beschädigung der Kabelseelenverbindung und um eine Korrosion der Bewehrungselemente zu vermeiden, wird ein metallischer Schild um die Kabelseele gelegt. Der Schild ist vorzugsweise aus Aluminium, wenn die Bewehrung aus Stahl ist. Ein solcher Schild hat die Funktion einer Opferanode.

Verbindungen gemäss der Erfindung sind hochwertiger als übliche Verbindungen. Die Spannungen werden über den ganzen Umfang der Bewehrung verteilt und die Spannung in der Kabelseele ist minimal.

Die Erfindung wird nun anhand von Zeichnungen von Ausführungsbeispielen näher erläutert. Es zeigen:

Fig. 1 schematisch zwei Kabelenden, bei denen vor dem Verbinden der Kabelseelen die Bewehrungen zum Verbinden vorbereitet sind;

Fig. 2 einen Schnitt durch ein Kabelende und eine Klammer entlang der Linie A-A in Fig. 1;

Fig. 3 einen Schnitt durch eine Klammer auf einem Bewehrungselement;

Fig. 4 schematisch eine Klemmeinrichtung auf den Klammern zum Gegeneinanderspannen der Kabelenden;

Fig. 5 einen Schnitt entlang der Linie B-B in Fig. 4;

Fig. 6 schematisch die verbundenen Bewehrungselemente nach dem Entfernen der Klemmeinrichtung und der Klammern;

Fig. 7 einen Schnitt entlang der Linie C-C in Fig. 6;

Fig. 8 schematisch eine zweite Ausführung einer Bewehrungsverbindung, und

Fig. 9 und 10 eine weitere Ausführung einer Bewehrungsverbindung im vorbereiteten und im endgültigen Zustand.

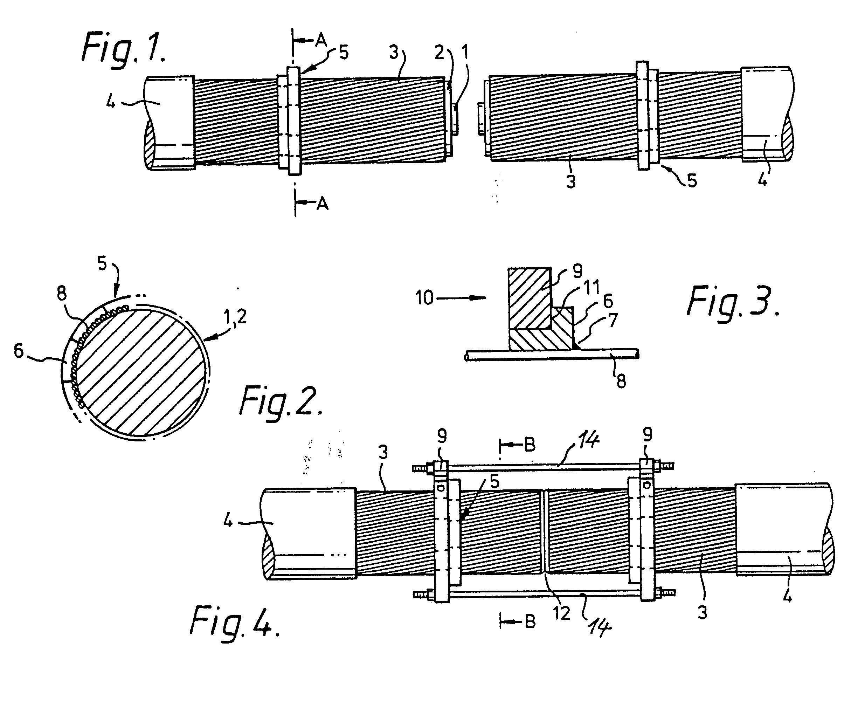

In den Fig. 1 bis 7 ist ein Ausführungsbeispiel dargestellt, in dem die Bewehrungselemente entlang dem Kabelumfang miteinander verbunden sind. In Fig. 1 sind zwei Enden von Leistungskabeln gezeigt, die je einen Leiter 1 mit einer Isolation 2 und eine Bewehrung 3 sowie eine äussere Korrosionsschutzschicht 4 aufweisen.

Der Aufbau der Kabelseele ist ohne Bedeutung und bei Kabeln für die Nachrichtenübertragung kann auch noch eine undurchlässige Schicht auf der Kabelseele vorhanden sein. Mit Kabelseele sind alle Kabelelemente innerhalb der Bewehrung gemeint. Der Einfachheit halber sind die beiden Kabelenden gleichartig zur Verbindung vorbereitet, so dass ihre Verbindung an der gleichen Stelle wie die Kabelseelenverbindung zu liegen kommt. Die beiden Verbindungen können auch voneinander entfernt angeordnet sein. Es kann auch sein, dass die Kabelseelen ausserhalb der Strecke zwischen den Klammern 5 auf den Bewehrungen verbunden werden.

Nach dem Entfernen der Korrosionsschutzschicht 4 und dem Reinigen der Bewehrungselemente an der vorgesehenen Verbindungsstelle wird je eine Klammer 5 auf den Umfang der Kabelenden aufgesetzt und dort mit Gruppen von Bewehrungselementen verlötet oder verschweisst. In den Zeichnungen sind die Bewehrungselemente als runde Drähte dargestellt; es können auch flache Drähte oder andere Arten von Bewehrungen sein.

Im Prinzip ist es möglich, eine Klammer 5 in Form eines vollen Ringes oder aus zwei Ringhälften auf den Bewehrungselementen zu montieren. Zweckmässiger ist es, um die Bewehrungsdrähte aufwinden oder abheben zu können, einen Satz Klammerteile 6 zu verwenden, deren Teile jeweils auf einer Gruppe von Drähten 8 montiert sind, wie es in Fig. 2 dargestellt ist.

Die Klammern 5 können im Querschnitt die verschiedensten Formen aufweisen, deren einfachste ein einfacher zylindrischer Ring ist. Es ist zweckmässiger, die Klammern in Form eines zylindrischen Ringes mit einer Schulter auszubilden. In Fig. 3 ist ein Klammerteil 6 aus einem Ring mit einer Schulter im Querschnitt dargestellt. Eine Schweiss- oder Lötverbindung 7 verbindet das Klammerteil 6 mit einem Draht 8 der Bewehrung. Ausserdem ist eine Klemmeinrichtung 9 gemäss Fig. 4 dargestellt, die in Richtung des Pfeiles 10 eine Kraft ausübt. Die Klemmeinrichtung 9 drückt gegen eine Schulterfläche 11 und hält gleichzeitig die Klammerteile 6 auf den Bewehrungsdrähten 8.

Zum Ausrichten und Montieren der Klammerteile 6 auf die Bewehrungsdrähte 8 kann die Klemmeinrichtung 9, wie es in den Fig. 3 bis 5 gezeigt ist, auch benutzt werden. Man kann jedoch auch eine nicht gezeigte andere einfache Einrichtung benutzen. Nach dem Anbringen der Klammerteile 6 an die Gruppen der Drähte 8 der Bewehrung wird die dazu benutzte Einrichtung wieder entfernt und die in Gruppen zusammengefassten Drähte abgehoben oder aufgewunden, um die eventuellen unteren Lagen der Bewehrung und die Kabelseele zu erreichen.

In Fig. 4 ist dargestellt, wie die Bewehrung fertig zum Herstellen der Verbindung vorbereitet ist. Die Herstellung der Kabelseelenverbindung wird hier nicht beschrieben. Die Figur gibt die mögliche Zunahme des Durchmessers der Verbindungsstelle nicht wieder. Bei moderneren Verbindungstechniken wird jedoch eine solche Zunahme des Durchmessers sehr klein sein. Es sei auch angemerkt, dass bei einer Verschiebung der Bewehrungsverbindung weg von der Kabelseelenverbindung der Durchmesser der Kabelseele am Ort der Bewehrungsverbindung nur äusserst wenig oder gar nicht zunimmt. Nachdem die Kabelseelenverbindung fertiggestellt wurde, werden die Gruppen von Drähten der Bewehrung wieder in ihre ehemalige Lage zurückgebogen oder -gewunden. Die in Fig. 4 gezeigte Klemmeinrichtung 9 auf den beiden Klammern 5 ist so gespannt, dass die Ausrichtung und die vorbestimmte Spannung der Bewehrung erhalten bleibt. Es ist wesentlich, dass die Drähte der beiden Kabelenden sich zu Beginn überlappen oder zumindest aneinander anstossen. Daraufhin werden die Drähte zur Verbindung miteinander so abgeschnitten, dass eine V-förmige Rille 12 entsteht. Obwohl jedes Bewehrungselement des einen Kabelendes einem anderen des anderen Kabelendes gegenüberstehen muss, ist es nicht notwendig, dass die Gruppenaufteilung auf beiden Kabelenden einander entsprechen muss.

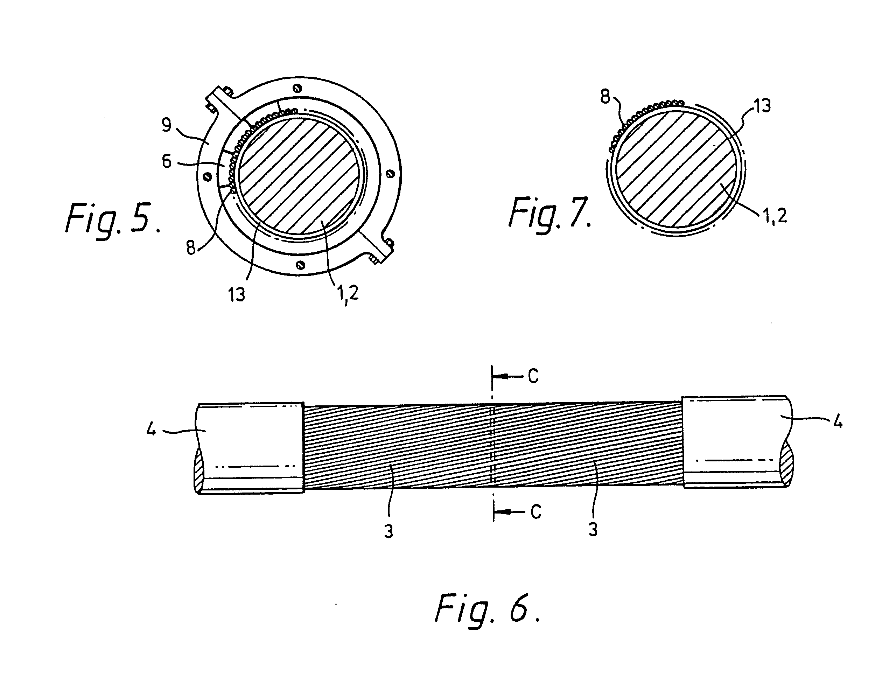

In der Fig. 5 ist ein Schnitt entlang der Linie B-B in Fig. 4 dargestellt und zeigt die Kabelseele 1, 2 umgeben von einem metallischen Schild 13, der unter der Bewehrungsverbindung angeordnet ist. Die Drähte 8 der Bewehrung sind durch die Klammerteile 6 in Gruppen geteilt und die Klemmeinrichtung 9 besteht aus je zwei halbkreisförmigen Teilen. Die Klemmeinrichtung 9 ist durch Bolzen 14 oder Stangen verspannt (Fig. 4).

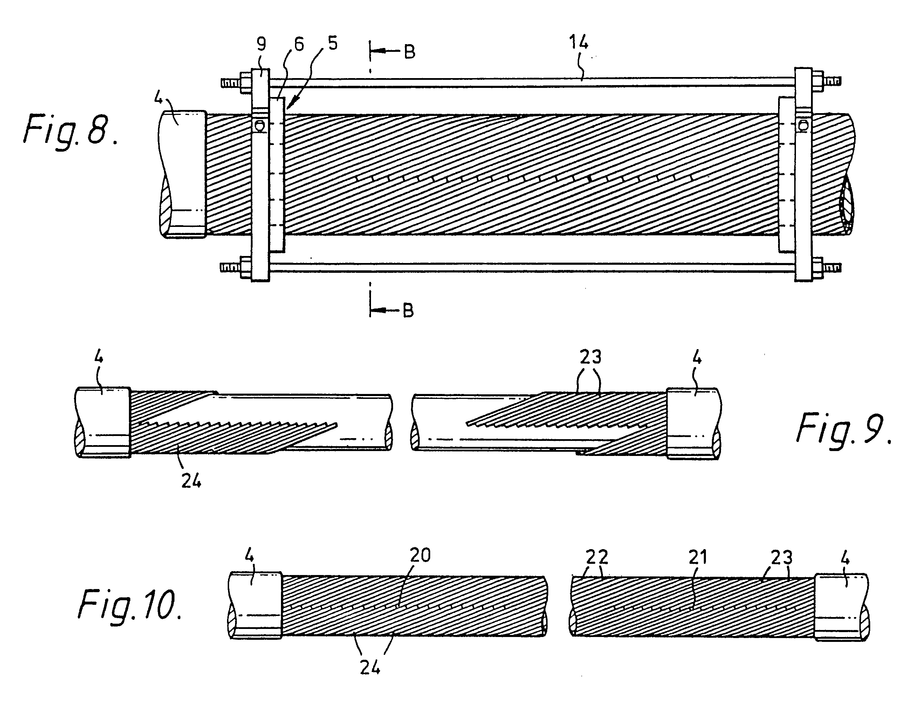

Während in der Fig. 4 gezeigt ist, dass die Verbindung der Bewehrung entlang einer Kreislinie auf dem Umfang der Bewehrung verläuft, können die Drähte auch einer mit dem anderen oder in Gruppen gestaffelt miteinander verbunden werden. Dies wird durch das entsprechende Abschneiden der Drähte an verschiedenen Stellen innerhalb der Klemmeinrichtung 9 erreicht. Dies ist in den Fig. 8 bis 10 dargestellt.

In Fig. 6 ist eine fertige Verbindung zwischen den Bewehrungen nach der Abnahme der Klemmeinrichtung 9 und der Klammerteile 6 der Klammern 5 gezeigt. Wie der Schnitt entlang der Linie C-C in Fig. 6 in Fig. 7 zeigt, sind die Drähte 8 in Gruppen von zwei und zwei miteinander verbunden. Der metallische Schild 13 dient dabei als Opferanode nach dem Verlegen des Kabels. Schliesslich werden die Korrosionsschutzschichten und möglicherweise ein Korrosionsschutz über die Bewehrungselemente aufgebracht.

Diese eingehende Darstellung einer Verbindungsherstellung wurde anhand einer Lage aus Bewehrungsdrähten beschrieben und diese Technik kann auch auf Bewehrungen mit mehreren Lagen übertragen werden, auch auf Bewehrungen aus Bändern. Das Verfahren zur Herstellung von Bewehrungsverbindungen ist auch nicht auf Bewehrungen aus Stahldrähten oder -bändern beschränkt, sondern kann auch bei Bewehrungen aus anderen Metallen und ebenso bei solchen aus nichtmetallischen Werkstoffen eingesetzt werden. Die Verbindung der Bewehrung wird durch Schweiss- oder Lötverfahren mit den entsprechenden Werkstoffen dafür ausgeführt.

Beim Löten von Bewehrungsverbindungen treten Probleme auf, weil das Lötmaterial die Neigung hat, von nicht horizontalen Stellen wegzufliessen. Eine Lösung dieses Problems ist in Fig. 8 an einem zweiten Ausführungsbeispiel der Erfindung dargestellt. Die Drähte der Bewehrung, die rund oder flach sein können, sind so miteinander verlötet, dass sie eine Reihe individueller Verbindung bilden. Nach dem Herstellen der Kabelseelenverbindung werden die Drähte der Bewehrung, wie beschrieben, in ihre richtige überlappende Lage gebracht. Dazu werden vorzugsweise Klammern 5 aus Klammerteilen 6 verwendet, ebenso wie eine Klemmeinrichtung 9 mit Bolzen oder Stangen 14. Die Länge der Verbindung der Bewehrung entspricht dem Schlag der Drähte der Bewehrung und der Querschnitt der Bewehrungsverbindung an der Stelle der Linie B-B ist in Fig. 5 dargestellt.

In manchen Fällen hat das Kabel ein solches Ausmass, dass die Bewehrung nicht zur Herstellung der Kabelseelenverbindung zurückgewunden werden kann. In solchen Fällen wird die Bewehrung vor dem Herstellen der Kabelseelenverbindung entfernt und danach vorgedrillte oder vorgebogene Stücke von Bewehrungsdrähten wieder ersetzt. In Fig. 9 sind zwei Kabelenden dargestellt, die zur Herstellung der Kabelseelenverbindung vorbereitet sind und bei denen die Bewehrungsverbindung durch Löten hergestellt werden soll. Bei einer Verbindung entlang dem Umfang eines Kabels kann die Verbindung an allen dafür geeigneten Stellen ausgeführt werden. Bei Verbindungen aus Lötreihen muss der Abstand zwischen den beiden Lötreihen genau dem Vielfachen der Schlaglänge der Bewehrung entsprechen. Die komplette Verbindung ist in Fig. 10 dargestellt, die die Reihe 20 und die Reihe 21 der Verbindung zeigt.

Beim Herstellen der Verbindung aus den beiden Reihen 20 und 21 ist zu beachten, dass nur eine Reihe entsprechend der Darstellung in Fig. 8 ausgeführt sein muss. Die Reihe 21 wird so ausgeführt, dass vorgebogene Drähte 22 mit den Drähten 23 der Bewehrung (Fig. 9, 10) des rechten Kabelendes ohne Anwendung von Vorspannung verbunden werden. Es muss aber darauf geachtet werden, dass die Drähte in ihrer vorbestimmten Position sind. Nachdem das rechte Kabelende fertig bearbeitet ist, wird die Reihe 20 bearbeitet. Hierzu werden die Drähte 22 mit den Drähten 24 der Bewehrung des linken Kabelendes gemäss der schon beschriebenen Technik der ersten Ausführung und derjenigen gemäss Fig. 8 verbunden.

Die Klammerteile 6 sind so ausgebildet, dass sie parallel zur Kabelachse zueinander gepresst werden. Alternativ können die Klammerteile auch Seiten parallel zum Winkel der Lage der Bewehrungselemente aufweisen. Die Klemmeinrichtung kann so angeordnet sein, dass sie parallel zur Achse der Bewehrungselemente gespannt wird.

## Patentansprüche

1. Verfahren zum Verbinden von zwei Kabeln, wobei die Kabel eine Kabelseele (1, 2) mit mindestens einem isolierten Leiter (1) und eine Bewehrung aus mindestens einer Lage Bewehrungselemente (3; 23, 24) aufweisen und die Kabelseelen in herkömmlicher Weise miteinander verbunden werden, dadurch gekennzeichnet, dass vor dem Verbinden der Kabelseelen auf den Bewehrungselementen (3; 23, 24) am Kabelumfang je eine Klammer (5) stoffschlüssig angebracht wird, und dass nach dem Freilegen und Verbinden der Kabelseelen die in die ursprüngliche Lage gebrachten Bewehrungen mit einer die Klammern umfassende Spannvorrichtung (14) gegeneinander verspannt werden, anschliessend während der Aufrechterhaltung der Verspannung miteinander verbunden werden und danach die Verspannung gelöst wird.

2. Verfahren nach Anspruch 1, dadurch gekennzeichnet, dass die Klammer (5) formschlüssig mit den Bewehrungselementen verbunden wird.

3. Verfahren nach Anspruch 1, dadurch gekennzeichnet, dass die Klammer (5) in eine Anzahl Klammerteile (6) aufgeteilt ist, die Gruppen von zwei oder mehr Bewehrungselementen (8) umfassen, so dass ein Abbiegen der Bewehrungselemente von der Kabelseele oder von unteren Bewehrungslagen erfolgen kann.

4. Verfahren nach einem der Ansprüche 1 oder 3, dadurch gekennzeichnet, dass die Bewehrungselemente (3; 4) durch eine die Klammern (5, 6) umfassende Klemmeinrichtung (9) gegeneinander bewegt werden, um eine Überlappung zu erhalten, indem die Klemmeinrichtung (9) parallel zur Kabelader zusammengepresst wird.

5. Verfahren nach Anspruch 4, dadurch gekennzeichnet, dass die überlappenden Enden der Bewehrungselemente abgeschnitten werden und dass die Elemente der Bewehrungen miteinander verbunden werden, wobei die Verspannung der Klammern (5, 6) aufrechterhalten wird, bis alle Elemente verbunden sind.

6. Verfahren nach Anspruch 5, dadurch gekennzeichnet, dass die Verbindung der Elemente durch Schweissen, Löten oder einen anderen Prozess erfolgt.

7. Verfahren nach Anspruch 5, dadurch gekennzeichnet, dass Gruppen von zwei oder mehr Elementen miteinander verbunden werden.

8. Verfahren nach einem der Ansprüche 5 oder 7, dadurch gekennzeichnet, dass nach dem Verbinden der Bewehrungen die Klammern (5, 6) entfernt werden, so dass die Elemente (8) sich frei zueinander in ihrer vorher festgelegten Lage bewegen können.

9. Verfahren nach Anspruch 1, dadurch gekennzeichnet, dass vor dem Verbinden der Bewehrungen ein metallischer Schild (13) auf die Kabelseele am Ort der Verbindung aufgebracht oder aufgewunden wird.

10. Verfahren nach Anspruch 9, dadurch gekennzeichnet, dass der Schild (13) aus Aluminium bei einer Bewehrung aus Stahl besteht.

11. Verfahren nach Anspruch 1, dadurch gekennzeichnet, dass vor dem Anbringen der Klammern (5) die Bewehrungselemente (23, 24) mindestens eines Kabelendes zur Herstellung der Kabelseelenverbindung zurückgeschnitten werden, und dass die Bewehrungselemente zur Verbindungsherstellung durch vorverdrillte Ersatzelemente (22) wieder vervollständigt werden.

12. Verfahren nach Anspruch 1, dadurch gekennzeichnet, dass die Bewehrungselemente der beiden Kabel so liegen, dass eine Verbindung der beiden Bewehrungen auf einer Mantellinie erfolgen kann.

## Revendications

1. Procédé pour connecter deux câbles, chacun des câbles présentant une âme de câble (1, 2) avec au moins un conducteur isolé (1) et une armature faite d'au moins une couche d'éléments d'armature (3; 23, 24), dans lequel les âmes des câbles sont reliées entre elles de manière traditionnelle, caractérisé par le fait qu'avant la liaison des âmes des câbles on dispose autour de chaque câble, sur les éléments d'armature (3; 23, 24), une pince (5) reliée à la matière et que, après avoir découvert et connecté les âmes des câbles, les armatures sont ramenées dans leur situation initiale et sont contraintes l'une vers l'autre au moyen d'un dispositif de serrage entourant les pinces (14), puis, pendant la durée du maintien de la contrainte, sont reliées entre elles, après quoi la contrainte est supprimée.

2. Procédé conforme à la revendication 1, caractérisé par le fait que la pince (5) est reliée aux éléments d'armature en épousant leur forme.

3. Procédé conforme à la revendication 1, caractérisé par le fait que la pince (5) est répartie en un certain nombre de pièces (6) qui embrassent des groupes de deux ou plusieurs éléments d'armature (8), de telle sorte qu'on puisse réaliser une courbure des éléments d'armature par rapport à l'âme des câbles ou par rapport aux couches inférieures d'armature.

4. Procédé conforme à l'une des revendications 1 ou 3, caractérisé par le fait que les éléments d'armature (3; 23, 24) peuvent être contraints les uns vers les autres au moyen d'un dispositif de serrage (9) entourant chacune des pinces (5, 6), cela afin d'assurer un recouvrement qui est obtenu en tirant les dispositifs de serrage (9) parallèlement à l'âme du câble.

5. Procédé conforme à la revendication 4, caractérisé par le fait que les extrémités recouvrantes des éléments d'armature sont sectionnées et que les éléments des armatures sont reliés entre eux, la contrainte exercée sur les pinces (5, 6) étant maintenue jusqu'à ce que tous les éléments soient connectés.

6. Procédé conforme à la revendication 5, caractérisé par le fait que la liaison des éléments est réalisée soit par soudage, soit par brasage, soit par un autre procédé.

7. Procédé conforme à la revendication 5, caractérisé par le fait que des groupes de deux ou plusieurs éléments sont reliés entre eux.

8. Procédé conforme à l'une des revendications 5 ou 7, caractérisé par le fait qu'après avoir réalisé la connexion des armatures on enlève les pinces (5, 6), de telle sorte que les éléments (8) peuvent se mouvoir librement les uns par rapport aux autres, dans leur position préalablement définie.

9. Procédé conforme à la revendication 1, caractérisé par le fait qu'avant d'effectuer la liaison des armatures, on dispose ou on enroule un écran métallique (13) sur l'âme du câble, à l'endroit de la connexion.

10. Procédé conforme à la revendication 9, caractérisé par le fait que l'écran métallique (13) est en aluminium, lorsque l'armature est en acier.

11. Procédé conforme à la revendication 1, caractérisé par le fait qu'avant la pose des pinces (5) les éléments d'armature (23, 24) d'une extrémité de câble, au moins, sont sectionnés pour faciliter la connexion des âmes des câbles, et par le fait que pour la réalisation de la liaison des éléments d'armature, ceux-ci sont alors recomplétés par des éléments de réserve prétorsadés (22).

12. Procédé conforme à la revendication 1, caractérisé par le fait que les éléments d'armature des deux câbles sont disposés de telle sorte qu'une liaison des deux armatures puisse se faire selon une génératrice.

## Claims

1. Procedure for joining two cables, in which the cables have a cable core (1, 2) with at least one insulated conductor (1) and an armouring consisting of at least one layer of armouring elements (3; 23, 24) and the cable cores are joined together in the conventional manner, distinguished by the fact that a clip (5) fitting tightly to the material is fitted round the circumference of each cable over the armouring elements (3; 23, 24) before the cables cores are jointed and that, after the cable cores have been exposed and jointed, the armours which have been brought into the original position are braced towards each other with a stretching device (14) encircling the clips, then joined together whilst the bracing is maintained and after that the bracing is released.

2. Procedure in accordance with claim 1, distinguished by the fact that the clip (5) is positively connected to the armouring elements.

3. Procedure in accordance with claim 1, distinguished by the fact that the clip (5) is subdivided into a number of partial clips (6) which grip groups of two or more armouring elements (8), so that the armouring elements can be bent away from the cable core or from lower layers of armouring.

4. Procedure in accordance with one of claims 1 or 3, distinguished by the fact that the armouring elements (3; 23, 24) are moved towards each other by a clamping device (9) gripping the clips (5, 6) to obtain an overlap, the clamping device (9) being compressed parallel to the core of the cable.

5. Procedure in accordance with claim 4, distinguished by the fact that the overlapping ends of the armouring elements are cut off and that the elements of the armours are joined together, with the preliminary stressing of the clips (5, 6) maintained until all the elements have been jointed.

6. Procedure in accordance with claim 5, distinguished by the fact that the elements are jointed by welding, soldering or some other process.

7. Procedure in accordance with claim 5, distinguished by the fact that groups of two or more elements are jointed together.

8. Procedure in accordance with one of claims 5 or 7, distinguished by the fact that the clips (5, 6) are removed after the jointing of the armours so that the elements (8) can move freely relative to each other in their previously determined position.

9. Procedure in accordance with claim 1, distinguished by the fact that a metal shield (13) is applied to or wound over the core of the cable at the site of the joint before the armours are jointed.

10. Procedure in accordance with claim 9, distinguished by the fact that the shield (13) is made of aluminium with an armouring of steel.

11. Procedure in accordance with claim 1, distinguished by the fact that the armouring elements (23, 24) of at least one cable end are cut back to make the joint in the cable core before the clips (5) are fitted, and that the armouring elements are completed again to make the joint by means of pret-twisted replacement elements (22).

12. Procedure in accordance with claim 1, distinguished by the fact that the armouring elements of the two cables lie in such a way that two armours can be jointed on a surface line.

Fig. 1.

Fig. 2.

Fig. 3.

Fig. 4.

Fig. 5.

Fig. 7.

Fig. 6.

0 046 544

0 046 544

Fig.8.

Fig.9.

Fig.10.